# EUROPÄISCHE PATENTSCHRIFT

(11) **EP 2 547 569 B1**
(45) Veröffentlichungstag und Bekanntmachung des Hinweises auf die Patenterteilung: **25.07.2018**
(21) Anmeldenummer: 11708210.7
(22) Anmeldetag: 11.03.2011
(51) Int. Cl.: B62B 3/00, B62B 5/04, B60B 19/12

(54) **VERWENDUNG EINER MOBILEN VORRICHTUNG, MEDIZINISCHES GERÄT UND BREMSVORRICHTUNG**
USE OF A MOBILE DEVICE, MEDICAL UNIT AND BRAKING DEVICE
UTILISATION D'UN DISPOSITIF MOBILE, APPAREIL MÉDICAL ET DISPOSITIF DE FREINAGE

(30) Priorität: 15.03.2010 DE 102010011465; 12.11.2010 DE 102010051202
(43) Veröffentlichungstag der Anmeldung: 23.01.2013
(73) Patentinhaber: Fresenius Medical Care Deutschland GmbH, 61352 Bad Homburg (DE)
(72) Erfinder: FAULHABER, Thomas, 97493 Bergrheinfeld (DE); KAISER, Martin, 97437 Hassfurt (DE); LANGKAU, Wolfram, 61449 Steinbach (DE); ÖRTER, Gökhan, 35789 Weilmünster (DE); OESTERREICH, Stefan, 61267 Neu-Anspach (DE); RÜCKERT, Jochen, 97520 Hirschfeld (DE); SCHILLING, Jürgen, 97702 Münnerstadt (DE)
(74) Vertreter: Herrmann, Uwe
(86) Internationale Anmeldenummer: PCT/EP2011/001239
(87) Internationale Veröffentlichungsnummer: WO 2011/113562

(56) Entgegenhaltungen:
- EP-A1- 0 768 076
- EP-A1- 2 248 501
- DE-A1-102008 019 976
- GB-A- 2 408 692
- JP-A- 2007 106 254
- US-A1- 2006 076 822
- US-A1- 2007 096 541
- US-A1- 2008 156 616

## Beschreibung

Die Erfindung betrifft die Verwendung einer mobilen Vorrichtung für medizintechnische Anwendungen oder für den Klinikbetrieb, sowie ein medizintechnisches Gerät mit einem Chassis und wenigstens einem daran angeordneten Rad. Trolleys oder Wagen auf Rollen werden im Klinikalltag und in der Medizintechnik für verschiedenste Anwendungen verwendet. Sie kommen unter anderem als bewegliche Aufnahmeeinheiten für medizintechnische Geräte oder als Transportmittel für schwere oder sperrige Lasten zum Einsatz, die in einem Hospital von einem Ort zum anderen transportiert werden müssen.
Es ist notwendig, dass solche handgeführten Transportwagen einfach zu manövrieren sind, und dass ein Transportwagen über sämtliche Fortbewegungsrichtungen verfügt und somit beliebig in alle Richtungen gelenkt werden kann. Arbeitsabläufe im Klinikbetrieb stellen gegenüber anderen Bereichen zudem besondere Anforderungen an die eingesetzten Transportwägen. Für den Dialysebereich muss das Fahrwerk beispielsweise den Anforderungen der Norm IEC 60601-1, 3. Ausgabe genügen. Diese Norm umfasst eine Kippsicherheit bei 10° Schiefstellung bzw. bei einer horizontalen Krafteinwirkung von 220 N in 1,5 m Höhe, das Überfahren einer Schwelle von 20 mm bei einer Geschwindigkeit von 0,4 m/sec, sowie die Integration einer Feststelleinrichtung, die das Gerät bei einer Schiefstellung von 10° stationär halten kann. Bekannte Lösungen für die Verwirklichung sämtlicher Fortbewegungsrichtungen wie Schwenkrollen sind nicht praktikabel, da beispielsweise eine präzise Feststellung des Gerätes nicht uneingeschränkt möglich ist.
Es kann ferner vorgesehen sein, dass die Trolleys in eine Aufnahmeeinheit eingeschoben werden und mit dieser verrastet werden können. Hier ist insbesondere die Ausstattung des Trolleys mit Schwenkrollen nicht praktikabel, da dies eine Vergrößerung der Fahrwerksbreite zur Folge haben kann und damit den Einsatz in die Aufnahmeeinheit behindert.

EP 0 768 076 A1 betrifft als nächster Stand der Technik einen Rollstuhl mit einem Antriebsabschnitt, wobei dieser Antriebsabschnitt vier Räder, vier Elektromotoren für den Antrieb der Räder, und Drehzahlminderer umfasst. Das Rad weist an dessen Außenumfang mehrere Rotationselemente auf, die um Lagerachsen rotierbar sind.
DE 10 2008 019976 A1 offenbart ein Omnidirektional-Rad aufweisend eine Radnabe, die um eine Rotationsachse drehbar ist, zwei mit der Radnabe verbundene Radscheiben, die koaxial zur Radnabe angeordnet sind, und eine Anzahl von balligen Rollkörpern, die zwischen den Radscheiben angeordnet, gleichmäßig entlang eines Umfangsmantels des Rades verteilt sind.
US 2007/096541 A1 offenbart ein Rad mit einer zentralen Nabe und sich radial erstreckenden Rippen sowie einer ersten Reihe von Rollen und einer zweiten Reihe von Rollen.

US 2006/076822 A1 offenbart eine Rad-Baugruppe mit mehreren seitlich angeordneten kleinen drehbaren Rädern, wobei die seitliche Bewegung sowie Vorwärts- und Rückwärtsbewegung möglich sind.

GB 2 408 692 A offenbart ein Rad, das an dessen Außenumfang mehrere Rolle aufweist, die um Lagerachsen rotierbar sind.

Aufgabe der vorliegenden Erfindung ist es, eine mobile Vorrichtung für medizintechnische Anwendungen bzw. für den Klinikbetrieb in vorteilhafter Weise weiterzubilden.

Diese Aufgabe wird durch die Merkmale des Anspruchs 1 gelöst. Bevorzugte Ausführungsformen ergeben sich aus den Unteransprüchen.

Demnach ist die Erfindung auf die Verwendung einer mobilen Vorrichtung für medizintechnische Anwendungen oder für den Klinikbetrieb gerichtet, wobei die Vorrichtung ein Chassis und wenigstens ein daran angeordnetes und um eine Radachse rotierbares Rad aufweist, wobei das Rad wenigstens zwei parallel angeordnete, kreisförmige Radeile aufweist. Die Radteile für sich genommen weisen an deren Außenumfang mehrere Rotationselemente auf, die um Lagerachsen rotierbar sind. Die Lagerachsen liegen in der Rotationsebene des Rades. Die Radteile sind so miteinander verbunden, dass deren Rotation stets gemeinsam erfolgt. Die Erfindung ist dadurch gekennzeichnet, dass die Radteile entlang der Radachse relativ zueinander bewegbar sind und vorzugsweise relativ zueinander parallel verschiebbar sind, wobei vorzugsweise wenigstens ein Radteil ortsfest and wenigstens ein Radteil beweglich in Richtung der Radachse ist.

Vorzugsweise handelt es sich bei der mobilen Vorrichtung um einen gegebenenfalls handgeführten Transportwagen, insbesondere einen Transportwagen, der bei einer extrakorporalen Blutbehandlung wie der Hämodialyse verwendet wird. Die mobile Vorrichtung kann Aufnahmebehältnisse für Dialyseflüssigkeiten beherbergen bzw. Teil eines Dialysesystems sein.

Der Außenumfang des Rades bzw. das Rotationselement sollen in Kontakt mit dem Boden stehen. Bei dem Rotationselement kann es sich um eine gegebenenfalls bauchige Walze handeln. Bauchig heißt, dass der Durchmesser der Walze in deren Zentrum größer ist als an deren Randbereichen.

Bei dem Chassis handelt es sich um ein Gestell, einen Rahmen oder eine Karosserie oder dergleichen. Das Chassis kann ein Fahrgestell aufweisen, an dem das Rad angeordnet ist. Die Rotationsebene des Rades steht vorzugsweise normal auf der Radachse.

In einer Ausführungsform liegen die Lagerachsen in der Rotationsebene des Rades bzw. verlaufen in tangentialer Richtung zum Rad, so dass eine bidirektionale Rolle geschaffen wird.

In einer anderen Ausführungsform, die nicht zu der Erfindung gehört, verlaufen die Lagerachse in einem Winkel α zur Rotationsebene des Rades, wobei dieser Winkel α < 90° ist. Bevorzugte Werte für den Winkel α umfassen 0° < α < 90°, 15° < α < 75°, 30° < α < 60°, und 40° < α < 50°. Mit anderen Worten kann die Richtung der Lagerachse in dieser Ausführungsform durch das Additionsprodukt zweier Teilvektoren definiert werden. Ein erster Teilvektor steht parallel zur Radachse und ein zweiter Teilvektor tangential zum Rad. Der Betrag jedes Teilvektors ist positiv. In dieser Ausführungsform spricht man bei dem Rad auch von einem Mecanumrad.

In einer Ausführungsform weist die Vorrichtung mehrere Räder auf. Bevorzugt sind dabei wenigstens ein und vorzugsweise zwei Paare an Rädern. Ein Paar an Rädern ist koaxial an der Vorrichtung angeordnet ist. Die Räder eines Paares sind vorzugsweise an gegenüberliegenden Seiten des Chassis angeordnet. Die Vorrichtung kann beispielsweise vier oder sechs Räder aufweisen. Besonders bevorzugt sind vier Räder.

In einer Ausführungsform sind zwei, mehrere und vorzugsweise alle Räder der Vorrichtung identisch ausgeführt. In einer Ausführungsform sind die Radachsen aller Räder der Vorrichtung parallel.

Das Vorhandensein der Rotationselemente am Außenumfang des Rades ermöglicht eine Rollbewegung der mobilen Vorrichtung seitwärts zur Rotationsbewegung der Räder. Die notwendige bidirektionale Verschiebbarkeit wird durch die am Außenumfang des Rades angebrachten Rotationselemente bewerkstelligt. Dennoch wird eine kompakte Bauweise der mobilen Vorrichtung erreicht und es können alle Anforderungen gemäß IEC 60601-1, 3. Ausgabe optimal erfüllt werden.

In einer Ausführungsform weisen die Radteile für sich genommen mehrere Rotationselemente auf, die vorzugsweise gleichmäßig entlang dem Außenumfang des Radteiles beabstandet sind. Die Radteile für sich genommen können dabei beispielsweise mindestens vier, und vorzugsweise mindestens sechs Rotationselemente aufweisen.

In einer Ausführungsform weisen die Radteile für sich genommen zwischen jeweils zwei Rotationselementen und vorzugsweise zwischen allen entlang dem Außenumfang des Radteiles direkt aufeinanderfolgend angeordneten Rotationselementen einen Brückenabschnitt auf. Ein Brückenabschnitt beabstandet zwei aufeinanderfolgende Rotationselemente voneinander. Vorzugsweise sind die Lagerachsen eines und weiter vorzugsweise aller Rotationselemente an zwei an das jeweilige Rotationselement angrenzenden Brückenabschnitten aufgehängt. Die Brückenabschnitte sind vorzugsweise ein integraler Bestandteil des Rades bzw. fest und unbeweglich mit dem Rad verbunden, während die Rotationselemente zwar ebenfalls Bestandteil des Rades sind, jedoch im Verhältnis zum Rad bewegt werden können.

In einer Ausführungsform weisen die Radteile für sich genommen an seiner Innenfläche wenigstens einen radial abstehenden Innenvorsprung und an seiner Außenfläche wenigstens einen radial abstehenden Außenvorsprung auf. Die Lagerachse eines, mehrerer und vorzugsweise aller Rotationselemente kann in dieser Ausführungsform zwischen einem Innenvorsprung und einem Außenvorsprung aufgehängt sein. Unter der Innenseite des Rades wird die dem Chassis zugewandte Seite verstanden. Unter der Außenseite des Rades wird die dem Chassis abgewandte Seite verstanden. In einer bevorzugten Ausführungsform handelt es sich bei dem Innenvorsprung und/oder dem Außenvorsprung um genau einen vorzugsweise vollumfänglich gebildeten Vorsprung.
In einer Ausführungsform haben die in radialer Richtung von der Radachse wegzeigenden Oberflächenabschnitte der Vorsprünge bzw. Brückenabschnitte und die in radialer Richtung von der Radachse wegzeigenden Oberflächenabschnitte der Rotationselemente im Wesentlichen die gleiche radiale Entfernung zur Radachse. Vorzugsweise ist die Entfernung der von der Radachse wegzeigenden Oberflächenabschnitte der Vorsprünge bzw. Brückenabschnitte etwas geringer. Der Unterschied kann wenige Millimeter betragen, um eine quasi kreisförmige Erscheinung des Rades und damit optimale Rolleigenschaften zu ermöglichen. Der Unterschied ist beispielsweise zwischen 0 und 10 mm, < 5 mm oder < 3 mm.
Gemäß der Erfindung weist das Rad wenigstens zwei parallel angeordnete, kreisförmige Radteile auf. Vorzugsweise sind diese Radteile für sich genommen so ausgebildet, dass sie eines oder mehrere der Merkmale eines gesamten Rades aufweisen, wie sie im Zusammenhang mit den voranstehenden Ausführungsformen diskutiert wurden. So ist vorgesehen, dass beide Radteile an deren Außenumfang mehrere Rotationselemente aufweisen, die um Lagerachsen rotierbar sind, die in der Rotationsebene des Rades verlaufen. Die Rotationselemente können gleichmäßig entlang dem Außenumfang des Radteiles beabstandet sein. Zwischen den Radteilen kann ein Brückenabschnitt vorhanden sein, an dem vorzugsweise die Lagerachse der Rotationselemente aufgehängt ist.
Der Begriff "kreisförmig" umfasst auch im Wesentlichen kreisförmige Radteile, von der perfekten Kreisform durch das Vorhandensein der Rotationselemente und/oder Brückenabschnitte und/oder Vorsprünge etwas abgewichen werden kann. Die Rotationsebenen der Radteile sind vorzugsweise parallel. Die Radteile können im wesentlichen scheibenförmig sein und können auch als Rollenträger bezeichnet werden. Bevorzugt ist, dass ein Rad genau zwei Radteile aufweist. Durch die Radteile wird das Rad in zwei Teile unterteilt, und ist als Doppelrad ausgeführt.

In einer Ausführungsform sind die Radteile identisch ausgeführt. In einer Ausführungsform sind je zwei Radteile spiegelverkehrt angeordnet.

Gemäß der Erfindung sind die Radteile eines Rades so miteinander verbunden, dass deren Rotation stets gemeinsam erfolgt. Die Verbindung der Radteile kann so ausgeführt sein, dass diese durch Bolzen verbunden sind, die parallel zur Radachse verschoben werden können, zumindest relativ zu einem der Radteile. Die Bolzen bleiben jedoch stets mit beiden Teilen verbunden, sodass die Rotation der einzelnen Radteile stets gemeinsam erfolgt.

In einer Ausführungsform sind die Radteile entlang der Radachse relativ zueinander bewegbar, vorzugsweise relativ zueinander parallelverschiebbar. In einer Ausführungsform kann dabei ein Radteil ortsfest entlang der Richtung der Radachse an dieser angeordnet sein und wenigstens ein anderer Radteil beweglich in Richtung der Radachse an dieser angeordnet sein.

In einer Ausführungsform haben die Radteile entlang der Radachse einen definierten Maximatabstand zueinander. Dieser ist so gewählt, dass zumindest die Rotationselemente eines Radteils nicht von einem Bauteil des anderen Radteils berührt werden. Vorzugsweise ist dieser Maximalabstand jedoch relativ klein. Dieser kann beispielsweise kleiner als 2 cm, kleiner als 1 cm oder gar kleiner als 5 mm sein.

In einer Ausführungsform ist zwischen den Radteilen ein Federelement angeordnet. Dieses hält die Radteil bei Fehlen einer äußeren Krafteinwirkung auf Maximalabstand. Eine mögliche Parallelverschiebung der Teile zueinander erfolgt in dieser Ausführungsform gegen eine Rückstellkraft. Das Federelement kann ein elastisches Element wie eine mechanische Feder, insbesondere eine Schraubenfeder sein.

In einer anderen Ausführungsform sind die Radteile fest miteinander verbunden. Dies bedeutet, dass der Abstand der Radteile zueinander entlang der Radachse festgelegt ist, und dass deren Rotation stets gemeinsam erfolgt und auch keine Verschiebung gegeneinander entlang der Radachse erfolgt.

In einer Ausführungsform sind die Radteile in Rotationsrichtung des Rades so zueinander versetzt, dass die Rotationselemente zweier Radteile relativ zur Radachse nicht miteinander fluchten. In einer anderen Ausführungsform sind die Radteile in Rotationsrichtung des Rades so zueinander versetzt, dass die Rotationselemente und/oder Brückenabschnitte zweier Radteile relativ zur Radachse miteinander fluchten. Der Versatz ist vorzugsweise dauerhaft. In einer Ausführungsform ist der Versatz dergestalt, dass jedes Rotationselement wenigstens teilweise auf gleicher Höhe mit einem Brückenabschnitt des benachbarten Radteils liegt.

In einer Ausführungsform weisen ein, mehrere und vorzugsweise alle Brückenabschnitte wenigstens eines und vorzugsweise beider Radteile auf deren dem benachbarten Radteil zugewandten Seite ein Bremselement, wie beispielsweise eine Bremsbacke auf.

In einer Ausführungsform ragt das Rad an dessen Außenseite, und vorzugsweise an keiner Stelle seitlich über das Chassis hinaus. So kann die mobile Einheit beispielsweise formschlüssig in eine Aufnahmeeinheit aufgenommen werden.

In einer Ausführungsform wird das Rad seitlich durch ein Abdeckelement verdeckt. Das Abdeckelement kann ein Teil des Chassis sein, oder ein an der Radachse und/oder am Rad angebrachtes, separates Element. Die Abdeckelemente können an der Außen- und/oder der Innenseite des Rades angeordnet sein. Die Abdeckelemente sind vorzugsweise an die Form des Rades angepasst. Das Abdeckelement ist vorzugsweise ein starres Element. Sollte das Abdeckelement Teil des Chassis sein, kann es sich bei dem Abdeckelement um ein teilkreisförmig oder halbkreisförmig im Bereich des Rades aus dem Chassis hervortretendes Element handeln. Denkbar sind Flügel, Vorsprünge oder Schutztafeln. Bei einem an der Radachse und/oder am Rad befindlichen Abdeckelement kann es sich um eine zusammen mit dem Rad rotierbare, um eine individuell rotierbare oder eine im Verhältnis zum Chassis nicht rotierbare Radkappe oder Tafel handeln. Diese ist vorzugsweise kreisförmig und weiter vorzugsweise koaxial mit dem Rad bzw. den Radteilen angeordnet. Die Abdeckelemente sind vorzugsweise geringfügig kleiner als das Rad dimensioniert. Geringfügig kleiner dimensioniert kann heißen, dass im Falle einer Kreisform oder Halbkreisform der Radius um weniger als 3 cm, vorzugsweise weniger als 2 cm und weiter vorzugsweise weniger als 1 cm kleiner ist. Ein Vorteil dieser Ausführungsform ist, dass die Räder durch das Abdeckelement und/oder das Chassis geschützt sind, so dass keine Gegenstände, beispielsweise Dialyseschläuche, durch die rotierenden Räder eingezogen werden können. Es kommt somit zu keiner Behinderung der Rotationselemente.

In einer Ausführungsform weist das Chassis Ausnehmungen zur Aufnahme des Rades auf.

In einer Ausführungsform ist die Radachse unbeweglich an der mobilen Vorrichtung angeordnet. Das bedeutet, dass die Räder bzw. die Radachse fix, das heißt nicht verschwenkbar am Transportwagen angeordnet ist. Die Räder besitzen daher im Verhältnis zur Vorrichtung nur einen Freiheitsgrad, nämlich die Rotation um die feste Radachse. In dieser Ausführungsform können die Räder seitlich nicht verschwenkt werden, sodass die potentielle Aufnahme in eine Aufnahmeeinheit nicht behindert wird, und die praktikable Handhabung bzw. Spur- und Bremsstabilität des Trolleys nicht durch ein Verschwenken der Räder beeinträchtigt wird.

In einer Ausführungsform, die nicht zu der Erfindung gehört, in der die Vorrichtung wenigstens ein Paar und vorzugsweise zwei Paare an koaxial an der Vorrichtung angeordneten Rädern aufweist, haben die Lagerachsen der Räder des Paares eine bestimmte Stellung zueinander. Die Lagerachsen der Rotationselemente eines ersten Rades eines Radpaares stehen dabei in einem Winkel α zur Rotationsebene, und die Lagerachsen der Rotationselemente des zweiten Rades desselben Radpaares stehen in einem Winkel a' zur Rotationsebene. Die Winkel α und a' haben entgegengesetzte Vorzeichen. Vorzugsweise sind die Lagerachsen aller Rotationselemente eines Rades parallel. Die Winkel α und a' haben denselben Betrag. Die Lagerachsen der Räder eines Radpaares können auch an einer parallel zur Rotationsebene verlaufenden Spiegelebene gespiegelt sein. So kann bewirkt werden, dass, wenn die Räder in Hauptdrehrichtung gebremst werden, es für die Seitenbewegung durch die Rotationselemente automatisch ebenfalls zu einer Bremswirkung kommt. Dies gilt insbesondere für ein Mecanumrad.
Ein weiteres Ziel der Erfindung ist es, ein medizintechnisches Gerät bereitzustellen, das eine verbesserte Handhabung gegenüber medizintechnischen Geräten aus dem Stand der Technik aufweist.
Dieses Ziel wird mit einem medizintechnischen Gerät gemäß Anspruch 10 erreicht. Vorteilhafte Ausführungsformen ergeben sich aus dem Unteranspruch. So ist erfindungsgemäß ein medizintechnisches Gerät vorgesehen, welches ein Chassis und wenigstens ein an dem Chassis angeordnetes und um eine Radachse rotierbares Rad aufweist, wobei das Rad wenigstens zwei parallel angeordnete, kreisförmige Radteile aufweist. Die Radteile für sich genommen weisen an deren Außenumfang mehrere Rotationselemente auf, die um Lagerachsen rotierbar sind. Die Lagerachsen liegen in der Rotationsebene des Rades. Die Radteile sind so miteinander verbunden, dass deren Rotation stets gemeinsam erfolgt. Die Erfindung ist dadurch gekennzeichnet, dass die Radteile entlang der Radachse relativ zueinander bewegbar sind und vorzugsweise relativ zueinander parallel verschiebbar sind, wobei vorzugsweise wenigstens ein Radteil ortsfest and wenigstens ein Radteil beweglich in Richtung der Radachse ist.
Vorzugsweise Ausbildungen des erfindungsgemäßen, medizintechnischen Gerätes sowie Vorteile ergeben sich entsprechend aus der Beschreibung verschiedener Ausführungsformen der erfindungsgemäßen Verwendung einer mobilen Vorrichtung für medizintechnische Anwendungen oder für den Klinkbetrieb.

Die folgenden Ausführungsformen gehören nicht zu der Erfindung.

Eine Bremsvorrichtung, vorzugsweise eine Bremsvorrichtung für ein medizintechnisches Gerät und/oder für eine mobile Vorrichtung für medizintechnische Anwendungen oder für den Klinikbetrieb kann bereitgestellt werden, die ein verlässliches Abbremsen und eine ortsfeste Einstellung in allen Bewegungsrichtungen des Gerätes bzw. der Vorrichtung ermöglicht.
Demnach ist eine Bremsvorrichtung für ein um eine Radachse rotierbares Rad vorgesehen, wobei das Rad an dessen Außenumfang ein oder mehrere Rotationselemente aufweist. Die Rotationselemente sind um Lagerachsen rotierbar, die in der Rotationsebene des Rades oder in einem Winkel α zu dieser verlaufen, wobei der Winkel α < 90° ist. Es ist vorgesehen, dass die Bremsvorrichtung wenigstens ein bewegliches Bremselement mit wenigstens einer Bremsbacke aufweist, wobei die Bremsbacke in Bremsstellung der Bremsvorrichtung mit wenigstens einem der Rotationselemente derart in Kontakt steht, dass die Rotation des Rotationselements unterbunden wird oder der Rotation des Rotationselements eine Kraft entgegengesetzt wird, das Rotationselement also gebremst wird..

Vorzugsweise wird die Bremsbacke in Bremsstellung der Bremsvorrichtung mit zumindest all denjenigen Rotationselementen in Kontakt gebracht die in Kontakt mit dem Boden stehen.

Bei einer bidirektionalen Rolle kann die Funktionsweise einer herkömmlichen Bremsmechanik nicht verwendet werden, da die Rotationselemente zusätzlich zur Hauptdrehrichtung des Rades gebremst werden müssen. Mit der Bremsvorrichtung kann jedoch eine vollständige Realisierung der Bremsfunktion in alle Richtungen realisiert werden. Durch die reibschlüssige Anlage einer Bremsbacke an einem Rotationselement wird die Bewegung sowohl des Rades in Hauptdrehrichtung, als auch des jeweiligen Rotationselementes in dessen Drehrichtung gesperrt.

In einer Ausführungsform kann das bewegliche Bremselement von einer offenen Stellung, in der die Bremsbacke nicht in Kontakt mit dem Rad steht, reversibel in die Bremsstellung, in der die Bremsbacke mit einem, mehreren oder allen Rotationselementen des Rades in Kontakt steht, überführt werden.

In einer Ausführungsform weist das Rad wenigstens zwei parallel angeordnete, kreisförmige Radteile auf, die entlang der Radachse relativ zueinander bewegbar sind, und das bewegliche Bremselement wird durch ein entlang der Radachse bewegliches Radteil gebildet.

In einer Ausführungsform weist die Bremsvorrichtung ein weiteres bewegliches Bremselement auf, das die Radteile in Bremsstellung aneinander drückt. Vorzugsweise weist das weitere Bremselement wenigstens eine Bremsbacke auf, die insbesondere in der geschlossenen Stellung nicht in Rotationsrichtung des Rades und/oder der Rotationselemente bewegt werden kann, das heißt bezüglich einer Bewegung in den entsprechenden Richtungen ortsfest bzw. fix ist.

Besonders bevorzugt ist dabei, dass die Radteile in Rotationsrichtung des Rades so zueinander versetzt sind, dass die Rotationselemente bei der Betrachtung in Richtung der Radachse oder einer dazu parallelen Achse nicht miteinander fluchten, und wobei wenigstens einem und vorzugsweise jedem Rotationselement auf gleicher Höhe in Rotationsrichtung des Rades ein Brückenabschnitt des benachbarten Radteils mit einer dem Rotationselement zugewandten Bremsbacke gegenüberliegt.

Bei dem weiteren beweglichen Bremselement kann es sich beispielsweise um eine in die Richtung der Achse verschiebbares, bewegliches Bremselement handeln. Das weitere bewegliche Bremselement kann auch eine Bremsscheibe sein, die konzentrisch mit dem Rad bzw. dem Radteil an der Achse angeordnet ist und entlang der Achse auf das Rad zubewegt werden kann. Diese Bewegung hat vorzugsweise nur einen Freiheitsgrad. Die Bewegung kann ferner gegen eine Rückstellkraft, wie eine Federkraft durch ein elastisches Element wie eine mechanische Feder, insbesondere eine Schraubenfeder hervorgerufen sein. Das weitere bewegliche Bremselement greift vorzugsweise an der Innenseite des Rades bzw. an der Innenseite des innenliegenden Radteils an das Rad an.

In einer Ausführungsform ist das Bremselement bzw. die Bremsbacke in der Rotationsebene bewegbar, wobei die Bewegung einen Freiheitsgrad aufweist. Vorzugsweise ist das Bremselement bzw. die Bremsbacke entlang einer vordefinierten, weiter vorzugsweise linearen Bahn von der offenen Stellung in die Bremsstellung überführbar. Die lineare Bahn führt ist vorzugsweise vertikal, und das Überführen des Bremselements bzw. der Bremsbacke von der offenen Stellung in die Bremsstellung passiert von oben nach unten.

In einer Ausführungsform weist das Rad wenigstens zwei parallel angeordnete, kreisförmige und fest miteinander verbundene Radteile auf, wobei sich das Bremselement bzw. die Bremsbacke zwischen den beiden Radteilen befindet.

In einer Ausführungsform weist die Bremsvorrichtung ein Arretierungsmittel auf, so dass das Bremselement bzw. die Bremsbacke in der geschlossenen oder offenen Stellung arretiert werden kann.

In einer Ausführungsform weist die Bremsvorrichtung ein Rückstellmittel auf, das eine Rückstellkraft auf das Bremselement bzw. die Bremsbacke ausübt, die bei Fehlen einer äußeren Krafteinwirkung eine Rückführung in die geschlossene oder offene Stellung bewirkt. Geeignete Rückstellmittel umfassen ein elastisches Element wie eine mechanische Feder, insbesondere eine Schraubenfeder.

In einer Ausführungsform ist das Rad der Bremsvorrichtung so ausgebildet, wie dies im Zusammenhang mit der Diskussion einer oder mehrerer Ausführungsformen einer erfindungsgemäßen Verwendung diskutiert wurde.

Zurückkommend auf die erfindungsgemäße Verwendung einer mobilen Vorrichtung kann in einer Ausführungsform vorgesehen sein, dass die mobile Vorrichtung eine Bremsvorrichtung aufweist.
Zurückkommend auf das erfindungsgemäße medizinische Gerät kann in einer Ausführungsform vorgesehen sein, dass das medizinische Gerät eine Bremsvorrichtung aufweist.
Weitere Einzelheiten und Vorteile der Erfindung ergeben sich aus den im Zusammenhang mit den Figuren beschriebenen und im folgenden dargestellten Ausführungsbeispielen. In den Figuren zeigen:
- Figur 1:: eine perspektivische Ansicht einer Ausführungsform eines erfindungsgemäßen medizintechnischen Gerätes,
- Figur 2:: eine perspektivische Detailansicht eines Rades des medizintechnischen Gerätes gemäß Figur 1,
- Figur 3a, Figur 3b:: eine perspektivische Ansicht und einen Querschnitt durch das Rad eines medizintechnischen Gerätes mit einer Ausführungsform einer nicht erfindungsgemäßen Bremsvorrichtung,
- Figur 4:: einen Querschnitt durch das Rad eines erfindungsgemäßen medizintechnischen Gerätes mit einer weiteren Ausführungsform einer Bremsvorrichtung, und
- Figur 5a, Figur 5b:: eine perspektivische Ansicht einer weiteren Ausführungsform eines nicht erfindungsgemäßen medizintechnischen Gerätes.

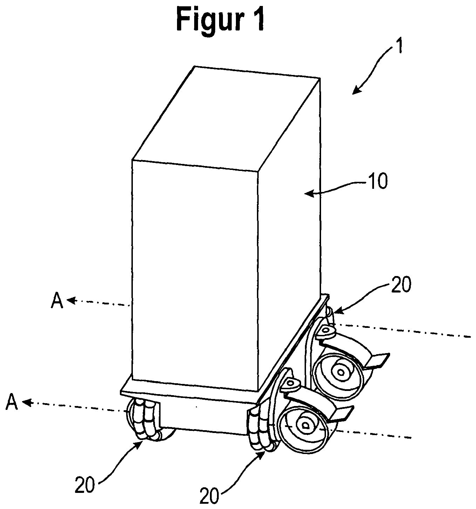

Figur 1 zeigt ein erfindungsgemäßes medizintechnisches Gerät 1 (bzw. eine mobile Vorrichtung gemäß der erfindungsgemäßen Verwendung) in perspektivischer Ansicht.

Die Vorrichtung weist ein Chassis 10 mit vier Rädern 20 auf, bestehend aus zwei Radpaaren, die an zwei parallelen Tragachsen A gelagert sind. Die Radachsen A sind unbeweglich am Chassis 10 bzw. dem Fahrgestell der mobilen Vorrichtung 1 angeordnet. Die Räder eines Radpaares liegen an gegenüberliegenden Seiten des Chassis. Keines der Räder 20 ragt seitlich, d.h. an deren Außenseite über das Chassis hinaus. Das Chassis weist Ausnehmungen zur Aufnahme aller Räder auf.

In Figur 1 sind zwei auf der rechten Seite des Chassis 10 montierte Räder dargestellt, die nicht mit Bezugszeichen versehen sind und die senkrecht zu den erfindungsgemäßen Rändern 20 der Vorrichtung stehen. Diese Räder repräsentieren den Stand der Technik und sind bei der erfindungsgemäßen Vorrichtung nicht vorhanden.

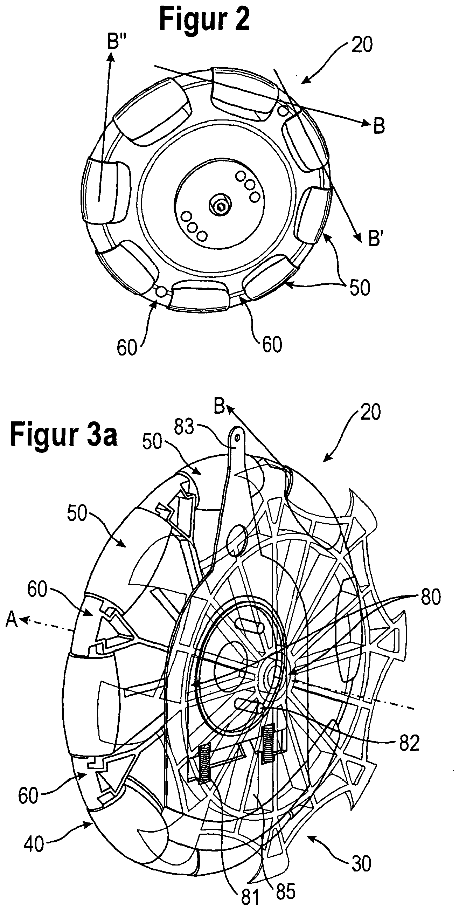

Eine perspektivische Detailansicht eines Rades 20 ist in Figur 2 gezeigt.

Das Rad ist mit einem Freiheitsgrad um eine Radachse A rotierbar und weist an dessen Außenumfang mehrere gleichmäßig entlang dem Außenumfang des Rades 20 beabstandete Rotationselemente 50 auf. Zwischen den Rotationselementen 50 liegen die Brückenabschnitte 60. Die Brückenabschnitte 60 sind ein integraler Bestandteil des Rades 20. Die Rotationselemente 50 sind als bauchige Walzen ausgeführt, deren Durchmesser in der Mitte etwas größer ist als deren Durchmesser im Randbereich. Trotz der Übergänge zwischen Rotationselementen 50 und Brückenabschnitten 60 am Außenumfang der Räder 20 ist das Rad im wesentlichen kreisförmig. So wird eine sanfte Fortbewegung der Vorrichtung 1 in Rotationsrichtung der Räder 20 bewerkstelligt. Dennoch kann erkannt werden, dass die in radialer Richtung von der Radachse A wegzeigenden Oberflächenabschnitte der Rotationselemente 50 einen geringfügig größeren Abstand zur Radachse aufweisen, als die in radialer Richtung von der Radachse weg zeigenden Oberflächenabschnitte der Brückenabschnitte 60.

Die Lagerachsen B, B', B" aller Rotationselemente 50 sind in zwei dem jeweiligen Rotationselement benachbarten Brückenabschnitten 60 gelagert und liegen in tangentialer Richtung zum Rad 20 in der Rotationsebene des Rades 20. Die Rotationsebene verläuft normal zur Radachse A.

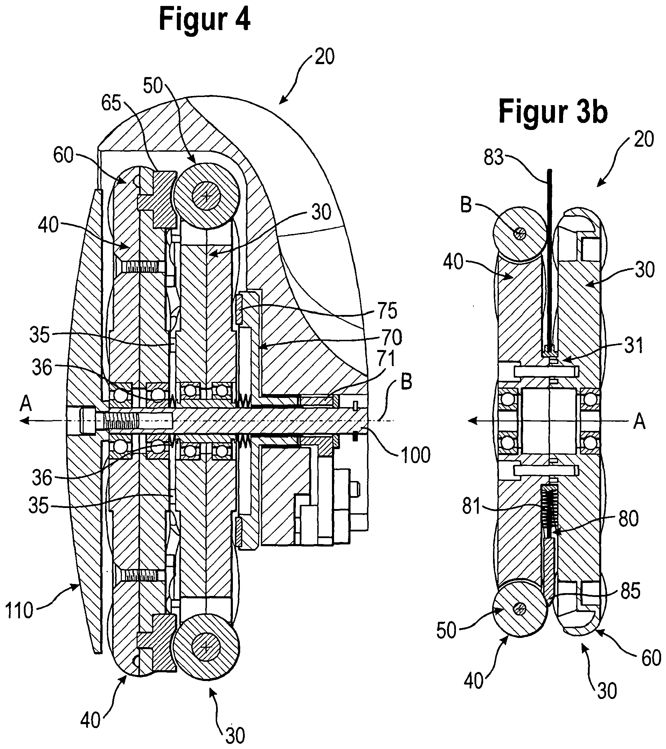

Figur 3a zeigt eine Seitenansicht und Figur 3b zeigt einen Querschnitt durch ein Rad eines medizintechnischen Geräts 1 (bzw. einer mobilen Vorrichtung gemäß der Verwendung) mit einer Ausführungsform einer nicht erfindungsgemäßen Bremsvorrichtung.

Das Rad 20 ist um eine Radachse A rotierbar und weist zwei parallel angeordnete Radteile, ein inneres Radteil 30 und ein äußeres Radteil 40 auf. Das innere Radteil ist in Figur 3a nur schematisch dargestellt, sodass der Zwischenraum zwischen den Radteilen 30, 40 sichtbar ist. Das Rad 20 ist als Doppelrad ausgeführt.

Die Radteile 30, 40 weisen beide für sich genommen an deren Außenumfängen mehrere gleichmäßig entlang dem Außenumfang des Rades 20 beabstandete Rotationselemente 50 und Brückenelemente 60 auf. Die Rotationselemente 50 sind wie im Zusammenhang mit Figur 2 erläutert geformt und an normal zur Darstellungsebene verlaufenden Lagerachsen B gelagert. Die Radteile 30, 40 sind in Rotationsrichtung des Rades so zueinander versetzt, dass alle Rotationselemente 50 des inneren Radteils 30 einem Brückenabschnitt 60 des äußeren Radteils 40 gegenüberstehen, und dass alle Rotationselemente 50 des äußeren Radteils 40 einem Brückenabschnitt 60 des inneren Radteils 30 gegenüberstehen.

Der innere Radteil 30 und der äußere Radteil 40 des Doppelrades 20 sind im Abschnitt 31 fest miteinander verbunden. Sie sind zueinander weder in Rotationsrichtung noch in axialer Richtung verschiebbar. Deren Rotation erfolgt stets gemeinsam.

Die in Figur 3a und in Figur 3b dargestellte, nicht erfindungsgemäße Bremsvorrichtung umfasst ein bewegliches Bremselement 80 mit einer Bremsbacke 85. Das bewegliche Bremselement 80 ist in Form eines Schubblechs dargestellt. Die Bremsbacke 85 befindet sich am unteren Ende des Bremselements 80 und besitzt eine gekrümmte, längliche Ausdehnung, die dem Umfang der Radteile 30 und 40 nachempfunden ist.
Mit Hilfe einer Bremsmechanik wird das bewegliche Bremselement 80 mit der integrierten Bremsbacke 85 im Fall einer Bremsung von einer offenen Stellung nach unten in eine Bremsstellung gedrückt. Das Bremselement 80 kann dabei durch Betätigung des Hebels 83 in der Rotationsebene des Rades 20 bewegt werden, wobei diese Bewegung aufgrund einer Verdrehsicherung 82 vertikal ist, nur einen Freiheitsgrad aufweist, und sich bei einer Drehbewegung des Rades 60 nicht mitdreht. Das Bremselement 80 befindet sich im Zwischenraum zwischen dem ersten Radteil 30 und zweiten Radteil 40. Bei einer Bewegung nach unten, welche gegen die Rückstellkraft einer Schraubenfeder 81 erfolgt, wird die Bremsbacke im unteren Bereich des Doppelrades 20 gegen die Rotationselemente 50 sowohl des ersten Radteils 30 als auch des zweiten Radteils 40 gedrückt.
Durch die reibschlüssige Anlage der Bremsbacke 85 an zumindest diejenigen Rotationselemente 50 beider Radteile 30 und 40, die mit dem Boden in Berührung stehen, wird das Rad 20 sowohl in Hauptdrehrichtung als auch in Drehrichtung der Rotationselemente gesperrt.
Figur 4 zeigt einen Querschnitt durch ein Rad eines erfindungsgemäßen medizintechnischen Geräts (bzw. einer mobilen Vorrichtung gemäß der erfindungsgemäßen Verwendung) mit einer von der in Figur 3a und Figur 3b gezeigten Ausführungsform verschiedenen Ausführungsform einer Bremsvor richtung.

Das Rad 20 ist, wie im Zusammenhang mit Figur 3a und Figur 3b näher beschrieben, um eine Radachse A rotierbar gelagert und weist zwei parallel angeordnete, in Rotationsrichtung des Rades versetzte Radteile 30, 40 mit Rotationselementen 50 und Brückenelementen 60 auf. Für eine detaillierte Beschreibung dieser Elemente wird auf die Beschreibung von Figur 3a sowie von Figur 3b Bezug genommen. Die Achse 100 ist ein stabförmiges Teil, woran das Rad in deren Zentrum aufgehängt sind.

Der innere Radteil 30 und der äußere Radteil 40 des Doppelrades 20 sind im Unterschied zu der in Figur 3a und Figur 3b gezeigten Ausführungsform jedoch nicht fest miteinander verbunden, sondern als Teil der in Figur 4 dargestellten Ausführungsform der erfindungsgemäßen Bremsvorrichtung zueinander in Richtung der Achse A gegeneinander verschiebbar. Im konkreten Ausführungsbeispiel ist das innere Radteil 30 in axialer Richtung beweglich und das äußere Radteil in axialer Richtung fest an der Achse 100 angeordnet.

Die Radteile 30, 40 sind durch Bolzen 35 verbunden, sodass die Verschiebung in Achsrichtung A zueinander gewährleistet ist, die Rotation der Radteile 30, 40 jedoch stets gemeinsam erfolgt. Der innere Radteil 30 ist gegenüber dem äußeren Radteil 40 durch Federelemente 36 leicht vorgespannt, sodass eine Rückstellkraft auf das innere Radteil 30 wirkt, die die Radteile 30, 40 ohne externe Krafteinwirkung in einem definierten Maximalabstand zueinander beabstandet hält.

Die Brückenabschnitte 60 der Radteile weisen zu dem jeweilig anderen Radteil, beziehungsweise durch den Versatz der Radteile 30, 40 zu den Rotationselementen 50 des jeweilig anderen Radteils zugewandte Bremsbacken 65 auf. Bei einer Parallelverschiebung des inneren Radteils 30 in Richtung des äußeren Radteils 40 treten die Bremsbacken 65 eines Radteils mit allen Rotationselementen 50 des jeweilig anderen Radteils in Kontakt und blockieren die Bewegung aller Rotationselemente 50 des Rades 20 um die Rotationsachsen B.

Ein weiterer Teil des in Figur 4 dargestellten Bremsmechanismus ist die Bremsscheibe 70, welche Bremsbeläge 75 aufweist.

Diese Bremsscheibe 70 ist so gelagert, dass sie entlang der Achse A verschoben werden kann, wobei die Bewegung einen Freiheitsgrad aufweist. Die Bremsscheibe 70 weist Stege auf, die so in Führungen am Chassis 10 aufgenommen sind, dass sie nicht um die Achse A rotiert werden kann. Mit Hilfe einer Nocke 71, die durch ein Bremsgestänge betätigt werden kann, wird die Bremsscheibe 70 axial verschoben und gegen den inneren Radteil 30 gedrückt. Das innere Radteil 30 wird hierdurch ebenfalls axial verschoben und drückt sich mit den einzelnen Rotationselementen 50 und Bremsbacken 65 gegen die Bremsbacken 65 und Rotationselemente 50 des äußeren Radteils 40.

Das die Bewegung der Bremsschreibe 70 relativ zum Chassis 10 in Drehrichtung gesperrt ist, wird durch das Aufliegen der Bremsbacken 75 der innere Radteil 30 mit einem Bremsmoment gehalten. Dieses Bremsmoment wird durch Bremsbacken 65 an das äußere Radteil 40 weitergegeben. Die Rotationselemente 50 werden durch das Anliegen der Bremsbacken 65 ebenfalls in der Drehrichtung um die Lagerachse B reibschlüssig gebremst.

Ferner weist die in Figur 4 gezeigte Ausführungsform ein an der Radachse 100 angebrachtes Abdeckelement 110 auf. Dieses Abdeckelement 110 ist eine im Verhältnis zum Chassis 1 nicht rotierbare, kreisförmige Radkappe, die koaxial mit dem Rad 20 angeordnet ist. Der Durchmesser des Abdeckelements 110 ist geringfügig kleiner als der des Rades 20. Durch das Vorhandensein des Abdeckelements 110 ist die Seitwärtsbewegung der Räder effizient durch eine Behinderung von Gegenständen wie beispielsweise Dialyseschläuche geschützt. Dennoch können die Räder 20 in Hauptrotationsrichtung Hindernisse die größer als 20 mm sind problemlos überfahren.

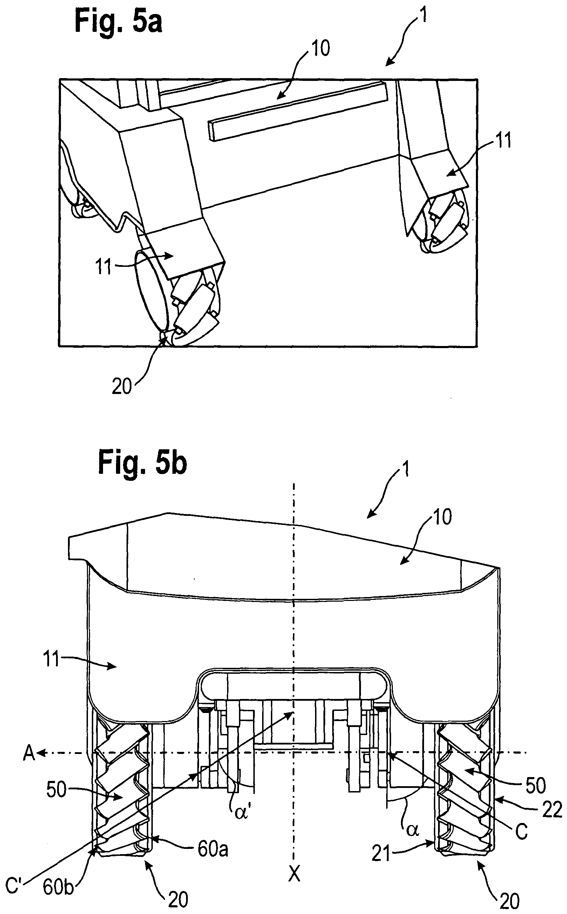

Figur 5 zeigt zwei perspektivische Ansichten einer weiterer Ausführungsform eines medizintechnischen Geräts (bzw. einer mobilen Vorrichtung gemäß der Verwendung). Die Ausführungsform gemäß Fig. 5 gehört nicht zu der Erfindung
Das Chassis 10 der Vorrichtung 1 weist einen Aufnahmebereich 11 für die Räder 20 auf. Der Unterschied zwischen der Ausführungsform der Vorrichtung gemäß
Figur 5 und der Ausführungsform der Vorrichtungen gemäß Figuren 1 bis 4 liegt im Wesentlichen in der Ausführung der Räder 20 und des Bremssystems. Auf die im Zusammenhang mit den vorangehenden Figuren gemachte Beschreibung der verbleibenden Teile der Vorrichtung sei verwiesen.
Die Räder 20 weisen eine Mehrzahl an Rotationselementen 50 auf, die an Lagerachsen C, C' rotierbar gelagert sind, die in einem spitzen Winkel a, a' zur Rotationsebene des Rades verlaufen.
An der Innenseite 21 und an der Außenseite 22 des Rades weisen die Räder jeweils vollumfänglich gebildete Vorsprünge 60a, 60b auf. Diese stehen radial von der Innenfläche und der Außenfläche der Räder 20 ab. Die Lagerachsen C, C' aller Rotationselemente 50 eines Rades 20 sind zwischen einem Innenvorsprung 60a und einem Außenvorsprung 60b aufgehängt.
Die Lagerachsen C der Rotationselemente 50 eines Rades 20 eines Radpaares und die Lagerachsen C' der Rotationselemente 50 des zweiten Rades 20 desselben Radpaares haben verlaufen in spitzen Winkeln α beziehungsweise a' zur Rotationsebene der Räder 20. Die Winkel α und a' haben entgegengesetzte Vorzeichen und denselben Betrag. Die Lagerachsen der Räder des Radpaares sind an einem parallel zur Rotationsebene verlaufenden Spiegelebene X gespiegelt.
Aufgrund der schrägen Lagerung der Rotationselemente 50 auf dem Rad 20 bekommt das Rad 20 bei einer seitlichen Bewegung ein Drehmoment in Hauptdrehrichtung (um Achse A). Bei einer seitlichen Bewegung dreht sich somit das am Fußboden aufstehende Rotationselement 50 und das komplette Rad 20. Werden in der Vorrichtung 1 an zwei Rädern 20 eines Radpaares Rotationselemente 50 eingebaut, die in zwei unterschiedlichen Schrägstellungen (vorzugsweise in gespiegelten Schrägstellungen) zur Hauptdrehrichtung um die Achse A angeordnet sind, und werden die Räder 20 in Hauptdrehrichtung gebremst, kommt es für die Seitenbewegung ebenfalls zu einer Bremswirkung. Die Bremsmechanik in Hauptdrehrichtung kann durch herkömmliche Bremsmechaniken realisiert werden.

## Patentansprüche

1. Verwendung einer mobilen Vorrichtung (1) für medizintechnische Anwendungen oder für den Klinikbetrieb, wobei die Vorrichtung (1) ein Chassis (10) und wenigstens ein an dem Chassis (10) angeordnetes und um eine Radachse (100) rotierbares Rad (20) aufweist, wobei das Rad (20) wenigstens zwei parallel angeordnete, kreisförmige Radteile (30, 40) aufweist, wobei die Radteile (30, 40) für sich genommen an deren Außenumfang mehrere Rotationselemente (50) aufweisen, die um Lagerachsen (C) rotierbar sind, die in der Rotationsebene des Rades (20) verlaufen, und die Radteile (30, 40) so miteinander verbunden sind, dass deren Rotation stets gemeinsam erfolgt,
**dadurch gekennzeichnet,**
**dass** die Radteile (30, 40) entlang der Radachse (100) relativ zueinander bewegbar sind und vorzugsweise relativ zueinander parallel verschiebbar sind, wobei vorzugsweise wenigstens ein Radteil (30, 40) ortsfest und wenigstens ein Radteil (30, 40) beweglich in Richtung der Radachse (100) ist.

2. Verwendung gemäß Anspruch 1, **dadurch gekennzeichnet, dass** die Radteile (30, 40) für sich genommen mehrere Rotationselemente (50) aufweisen, die gleichmäßig entlang dem Außenumfang des Radteiles (30, 40) beabstandet sind.

3. Verwendung gemäß Anspruch 1 oder 2, **dadurch gekennzeichnet, dass** die Radteile (30, 40) für sich genommen zwischen jeweils zwei Rotationselementen (50) und vorzugsweise zwischen allen entlang dem Außenumfang des Radteiles (30, 40) direkt aufeinanderfolgend angeordneten Rotationselementen (50) einen Brückenabschnitt aufweisen, wobei vorzugsweise die Lagerachsen (C) eines und vorzugsweise aller Rotationselemente (50) an den beiden an das jeweilige Rotationselement angrenzenden Brückenabschnitten aufgehängt sind.

4. Verwendung gemäß einem der vorhergehenden Ansprüche, **dadurch gekennzeichnet, dass** die Radteile (30, 40) für sich genommen an ihrer Innenfläche wenigstens einen radial abstehenden Innenvorsprung und an ihrer Außenfläche wenigstens einen radial abstehenden Außenvorsprung aufweisen, wobei die Lagerachse eines, mehrerer und vorzugsweise aller Rotationselemente (50) zwischen einem Innenvorsprung und einem Außenvorsprung aufgehängt ist.

5. Verwendung gemäß Anspruch 1, **dadurch gekennzeichnet, dass** die Radteile (30, 40) entlang der Radachse (100) einen definierten Maximalabstand zueinander haben, wobei zwischen den Radteilen (30, 40) vorzugsweise ein Federelement angeordnet ist, das die Radteile (30, 40) ohne äußere Krafteinwirkung auf Maximalabstand hält.

6. Verwendung gemäß einem der Ansprüche 1 bis 5, **dadurch gekennzeichnet, dass** die Radteile (30, 40) in Rotationsrichtung des Rades (20) so zueinander versetzt sind, dass die Rotationselemente (50) relativ zur Radachse (100) nicht miteinander fluchten, wobei vorzugsweise jedes Rotationselement wenigstens teilweise auf gleicher Höhe mit einem Brückenabschnitt des benachbarten Radteils (30, 40) liegt.

7. Verwendung gemäß einem der Ansprüche 1 bis 5, **dadurch gekennzeichnet, dass** die Radteile (30, 40) in Rotationsrichtung des Rades (20) so zueinander versetzt sind, dass die Rotationselemente (50) relativ zur Radachse (100) miteinander fluchten.

8. Verwendung gemäß einem der vorhergehenden Ansprüche, **dadurch gekennzeichnet, dass** das Rad (20) an keiner Stelle seitlich über das Chassis (10) hinausragt und/oder dass das Rad (20) seitlich durch ein Abdeckelement verdeckt wird, wobei das Abdeckelement ein Teil des Chassis (10) ist, oder ein an der Radachse (100) und/oder am Rad (20) angebrachtes Abdeckelement ist.

9. Verwendung gemäß einem der vorhergehenden Ansprüche, **dadurch gekennzeichnet, dass** die Radachse (100) unbeweglich an der mobilen Vorrichtung (1) angeordnet ist.

10. Medizintechnisches Gerät mit einem Chassis (10) und wenigstens einem an dem Chassis (10) angeordneten und um eine Radachse (100) rotierbaren Rad (20), wobei das Rad (20) wenigstens zwei parallel angeordnete, kreisförmige Radteile (30, 40) aufweist, wobei die Radteile (30, 40) für sich genommen an deren Außenumfang mehrere Rotationselemente (50) aufweisen, die um Lagerachsen (C) rotierbar sind, die in der Rotationsebene des Rades (20) verlaufen, und die Radteile (30, 40) so miteinander verbunden sind, dass deren Rotation stets gemeinsam erfolgt,
**dadurch gekennzeichnet,**
**dass** die Radteile (30, 40) entlang der Radachse (100) relativ zueinander bewegbar sind und vorzugsweise relativ zueinander parallel verschiebbar sind, wobei vorzugsweise wenigstens ein Radteil (30, 40) ortsfest und wenigstens ein Radteil (30, 40) beweglich in Richtung der Radachse (100) ist.

11. Medizintechnisches Gerät gemäß Anspruch 10, wobei das Rad (20) gemäß dem kennzeichnenden Teil von einem der Ansprüche 2 bis 8 und/oder die Radachse (100) gemäß dem kennzeichnenden Teil von Anspruch 9 ausgebildet ist.

## Claims

1. Use of a mobile apparatus (1) for technical medical applications or for clinical operation, wherein the apparatus (1) has a chassis (10) and at least one wheel (20) arranged at the chassis (10) and rotatable about a wheel axle (100), wherein the wheel (20) has at least two circular wheel parts (30, 40) arranged in parallel, with the wheel parts (30, 40) per se having a plurality of rotational elements (50) at their outer circumference which are rotatable about bearing axles (C) which extend in the rotational plane of the wheel (20) or with the wheel parts (30, 40) being connected to one another such that their rotation always takes place together,
**characterized in that**
the wheel parts (30, 40) are movable relative to one another along the wheel axle (100) and are preferably displaceable in parallel relative to one another, with at least one wheel part (30, 40) preferably being stationary and at least one wheel part (30, 40) being movable in the direction of the wheel axle (100).

2. Use in accordance with claim 1, **characterized in that** the wheel parts (30, 40) per se have a plurality of rotational elements (50) which are evenly spaced apart along the outer circumference of the wheel part (30, 40).

3. Use in accordance with either of claims 1 or 2, **characterized in that** the wheel parts (30, 40) per se have a bridge section between two respective rotational elements (50) and preferably between all the rotational elements (50) arranged directly behind one another along the outer circumference of the wheel part (30, 40), with the bearing axles (C) of one, and preferably of all rotational elements (50) preferably being suspended at the two bridge sections adjacent to the respective rotational element.

4. Use in accordance with one of the preceding claims, **characterized in that** the wheel parts (30, 40) per se have at least one radially projecting inner protrusion at their inner surfaces and have at least one radially projecting outer protrusion at their outer surfaces, with the bearing axle of one, a plurality of, and preferably of all the rotational elements (50) being suspended between an inner protrusion and an outer protrusion.

5. Use in accordance with claim 1, **characterized in that** the wheel parts (30, 40) have a defined maximum spacing from one another along the wheel axle (100), with a spring element preferably being arranged between the wheel parts (30, 40) and holding the wheel parts (30, 40) at maximum spacing without outer force exertion.

6. Use in accordance with one of the claims 1 to 5, **characterized in that** the wheel parts (30, 40) are offset to one another in the direction of rotation of the wheel (20) such that the rotational elements (50) do not align with one another relative to the wheel axle (100), with each rotational element preferably lying at least partly at the same level as a bridge section of the adjacent wheel part (30, 40).

7. Use in accordance with one of the claims 1 to 5, **characterized in that** the wheel parts (30, 40) are offset relative to one another in the direction of rotation of the wheel (20) so that the rotational elements (50) align with one another relative to the wheel axle (100).

8. Use in accordance with one of the preceding claims, **characterized in that** the wheel (20) does not project laterally beyond the chassis (10) at any point; and/or **in that** the wheel (20) is laterally covered by a cover element, with the cover element being a part of the chassis (10) or being a cover element attached to the wheel axle (100) and/or to the wheel (20).

9. Use in accordance with one of the preceding claims, **characterized in that** the wheel axle (100) is immovably arranged at the mobile apparatus (1).

10. A technical medical device having a chassis (10) and at least one wheel (20) arranged at the chassis (10) and rotatable about a wheel axle (100), wherein the wheel (20) has at least two circular wheel parts (30, 40) arranged in parallel, with the wheel parts (30, 40) per se having a plurality of rotational elements (50) at their outer circumference which are rotatable about bearing axles (C) which extend in the rotational plane of the wheel (20) and with the wheel parts (30, 40) being connected to one another such that their rotation always takes place together,
**characterized in that**
the wheel parts (30, 40) are movable relative to one another along the wheel axle (100) and are preferably displaceable in parallel relative to one another, with at least one wheel part (30, 40) preferably being stationary and at least one wheel part (30, 40) being movable in the direction of the wheel axle (100).

11. A technical medical device in accordance with claim 10, wherein the wheel (20) is configured in accordance with the characterizing portion of one of the claims 2 to 8 and/or the wheel axle (100) is configured in accordance with the characterizing portion of claim 9.

## Revendications

1. Utilisation d'un appareil mobile (1) pour des applications médicales techniques ou pour une opération clinique, l'appareil (1) ayant un châssis (10) et au moins une roue (20) agencée au niveau du châssis (10) et rotative autour d'un axe de roue (100), la roue (20) ayant au moins deux parties de roue circulaires (30, 40) agencées en parallèle, les parties de roue (30, 40) en elles-mêmes ayant une pluralité d'éléments rotatifs (50) au niveau de leur circonférence extérieure qui sont rotatifs autour d'axes de roulement (C) qui s'étendent dans le plan de rotation de la roue (20) ou les parties de roue (30, 40) étant connectées l'une à l'autre de telle sorte que leur rotation a toujours lieu ensemble,
**caractérisée en ce que**
les parties de roue (30, 40) sont mobiles l'une par rapport à l'autre le long de l'axe de roue (100) et peuvent de préférence être déplacées en parallèle l'une par rapport à l'autre, au moins une partie de roue (30, 40) étant de préférence fixe et au moins une partie de roue (30, 40) étant mobile dans la direction de l'axe de roue (100).

2. Utilisation selon la revendication 1, **caractérisée en ce que** les parties de roue (30, 40) en elles-mêmes ont une pluralité d'éléments rotatifs (50) qui sont espacés à intervalles réguliers le long de la circonférence extérieure de la partie de roue (30, 40).

3. Utilisation selon l'une ou l'autre des revendications 1 ou 2, **caractérisée en ce que** les parties de roue (30, 40) en elles-mêmes ont une section de pont entre deux éléments rotatifs (50) respectifs et de préférence entre tous les éléments rotatifs (50) agencés directement l'un derrière l'autre le long de la circonférence extérieure de la partie de roue (30, 40), les axes de roulement (C) de l'un, et de préférence de tous les éléments rotatifs (50) étant de préférence suspendus au niveau des deux sections de pont adjacentes à l'élément rotatif respectif.

4. Utilisation selon l'une des revendications précédentes, **caractérisée en ce que** les parties de roue (30, 40) en elles-mêmes ont au moins une protubérance intérieure faisant saillie radialement au niveau de leurs surfaces intérieures et ont au moins une protubérance extérieure faisant saillie radialement au niveau de leurs surfaces extérieures, l'axe de roulement de l'un, d'une pluralité, et de préférence de tous les éléments rotatifs (50) étant suspendu entre une protubérance intérieure et une protubérance extérieure.

5. Utilisation selon la revendication 1, **caractérisée en ce que** les parties de roue (30, 40) ont un espacement maximal défini de l'une à l'autre le long de l'axe de roue (100), un élément à ressort étant de préférence agencé entre les parties de roue (30, 40) et maintenant les parties de roue (30, 40) à un espacement maximal sans exercer de force extérieure.

6. Utilisation selon l'une des revendications 1 à 5, **caractérisée en ce que** les parties de roue (30, 40) sont décalées l'une par rapport à l'autre dans le sens de rotation de la roue (20) de telle sorte que les éléments rotatifs (50) ne s'alignent pas l'un avec l'autre par rapport à l'axe de roue (100), chaque élément rotatif se trouvant de préférence au moins partiellement au même niveau qu'une partie de pont de la partie de roue (30, 40) adjacente.

7. Utilisation selon l'une des revendications 1 à 5, **caractérisée en ce que** les parties de roue (30, 40) sont décalées l'une par rapport à l'autre dans le sens de rotation de la roue (20) de telle sorte que les éléments rotatifs (50) s'alignent l'un avec l'autre par rapport à l'axe de roue (100).

8. Utilisation selon l'une des revendications précédentes, **caractérisée en ce que** la roue (20) ne fait pas saillie latéralement au-delà du châssis (10) en aucun point ; et/ou **en ce que** la roue (20) est recouverte latéralement par un élément de couverture, l'élément de couverture étant une partie du châssis (10) ou étant un élément de couverture fixé à l'axe de roue (100) et/ou à la roue (20).

9. Utilisation selon l'une des revendications précédentes, **caractérisée en ce qu'**un axe de roue (100) est agencé de façon non mobile au niveau de l'appareil mobile (1).

10. Dispositif médical technique ayant un châssis (10) et au moins une roue (20) agencée au niveau du châssis (10) et rotative autour d'un axe de roue (100), la roue (20) ayant au moins deux parties de roue circulaires (30, 40) agencées en parallèle, les parties de roue (30, 40) en elles-mêmes ayant une pluralité d'éléments rotatifs (50) au niveau de leur circonférence extérieure qui sont rotatifs autour d'axes de roulement (C) qui s'étendent dans le plan de rotation de la roue (20) et les parties de roue (30, 40) étant connectées l'une à l'autre de telle sorte que leur rotation a toujours lieu ensemble,
**caractérisée en ce que**
les parties de roue (30, 40) sont mobiles l'une par rapport à l'autre le long de l'axe de roue (100) et peuvent de préférence être déplacées en parallèle l'une par rapport à l'autre, au moins une partie de roue (30, 40) étant de préférence fixe et au moins une partie de roue (30, 40) étant mobile dans la direction de l'axe de roue (100).

11. Dispositif médical technique selon la revendication 10, dans lequel la roue (20) est configurée conformément à la partie caractérisante de l'une des revendications 2 à 8 et/ou l'axe de roue (100) est configuré conformément à la partie caractérisante de la revendication 9.
